# FASCICULE DE BREVET EUROPEEN

(11) **EP 1 730 704 B1**
(45) Date de publication et mention de la délivrance du brevet: **02.08.2017**
(21) Numéro de dépôt: 05737038.9
(22) Date de dépôt: 07.03.2005
(51) Int. Cl.: G07C 9/00, G06K 9/00

(54) **PROCEDE DE CONTROLE D'IDENTIFICATION DE PERSONNES POUR LA DELIVRANCE DE DROITS ET SYSTEME POUR LA MISE EN OEUVRE DU PROCEDE**
IDENTIFIZIERUNGSPRÜFUNGSVERFAHREN VON PERSONEN ZUR EINRÄUMUNG VON RECHTEN UND SYSTEM ZUR IMPLEMENTIERUNG DESSELBEN
PERSON IDENTIFICATION CONTROL METHOD FOR GRANTING RIGHTS AND SYSTEM FOR IMPLEMENTING THE SAME

(30) Priorité: 17.03.2004 FR 0402769
(43) Date de publication de la demande: 13.12.2006
(73) Titulaire: MORPHO, 92130 Issy-Les-Moulineaux (FR)
(72) Inventeur: DIDIER, Bernard, F-77870 Vulaines Sur Seine (FR); RIEUL, François, F-78100 Saint Germain en Laye (FR)
(74) Mandataire: Cabinet Plasseraud
(86) Numéro de dépôt international: PCT/FR2005/000544
(87) Numéro de publication internationale: WO 2005/101329

(56) Documents cités:
- DE-A- 19 961 403
- US-A- 4 839 640
- US-A- 5 790 668
- US-A1- 2003 061 172
- US-B1- 6 230 148

## Description

La présente invention concerne le contrôle d'identification de personnes. Elle concerne plus particulièrement la génération d'un moyen unique d'identification de personnes.

Une application particulièrement intéressante de l'invention, bien que non exclusive, consiste à contrôler la délivrance de droits à des personnes ayant obtenu un moyen unique d'identification.

Le terme "droit" est à comprendre dans son acception la plus large, la o délivrance d'un droit à une personne s'entendant de la concrétisation d'une possibilité offerte à cette personne. A titre d'exemple, une personne peut se faire délivrer un permis de conduire, un badge d'accès à un bâtiment, un titre de transport, ou bien encore se faire attribuer un fonds de retraite, une indemnisation ou bien un remboursement dans le cadre d'un système de sécurité sociale par exemple, etc. La délivrance de tels droits est confrontée à un problème d'unicité, dans la mesure où l'on ne souhaite généralement pas délivrer plusieurs fois un même droit à une même personne.

Ainsi, certains systèmes actuels fonctionnent selon le principe suivant: une personne souhaitant se voir délivrer un droit décline d'abord son identité (par exemple ses nom et prénoms), puis une vérification de cette identité est effectuée avec des moyens généralement limités et peu fiables. Puis, on vérifie que la personne portant cette identité n'a pas déjà reçu le droit revendiqué, par exemple en consultant une base de données où sont stockées les identités de toutes les personnes ayant déjà acquis le droit considéré. Si la vérification montre que la personne n'a pas déjà acquis ce droit, ce dernier lui est alors délivré et cette information est prise en compte dans la base de données.

Toutefois, si la personne considérée a usurpé une ou plusieurs identités, il lui est possible d'obtenir le droit un nombre de fois égal au nombre des identités qu'elle présente au système. L'unicité de délivrance des droits n'est donc pas assurée dans de tels systèmes.

En outre, de tels systèmes délivrent des droits en liaison avec l'identité des personnes, si bien qu'ils ne permettent pas de délivrer des droits à des personnes en raison de leur qualité, par exemple leur appartenance à une association d'anonymes.

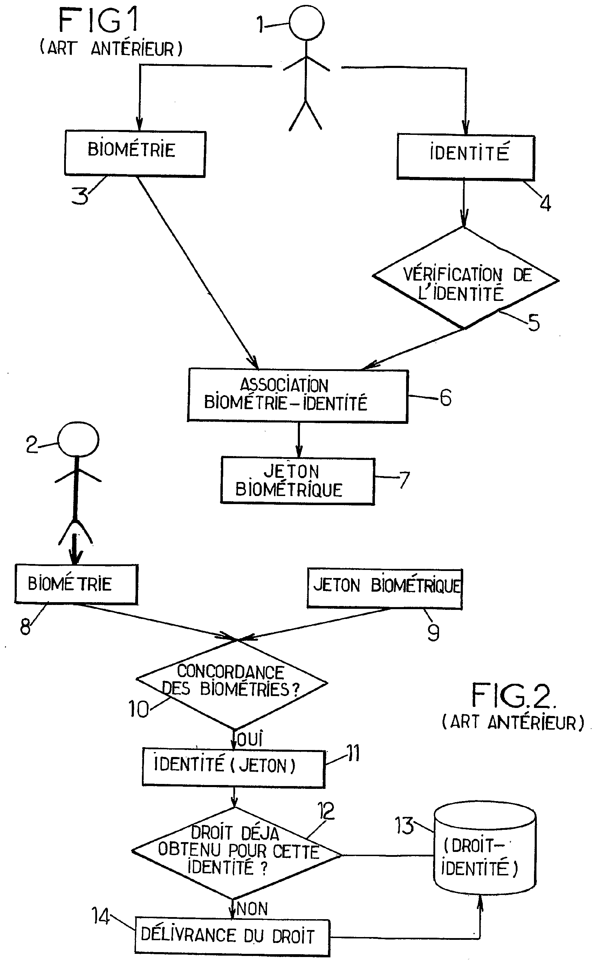

Pour limiter ces inconvénients et notamment pour fiabiliser l'identification des personnes, il est connu d'utiliser des données biométriques associées aux personnes. Le principe en résultant est illustré sur les figures 1 et 2.

La figure 1 montre une phase préalable dite d'enrôlement, au cours de laquelle un moyen d'identification d'une personne est généré, ce moyen d'identification créant un lien entre les données biométriques de la personne et son identité. Ainsi, la personne 1 possède une biométrie 3, c'est-à-dire des données biométriques qui la caractérisent, telles que des empreintes digitales, des caractéristiques de l'iris de ses yeux, etc. La personne 1 décline son identité 4, qui est alors vérifiée (étape 5). Puis, une association est faite entre la biométrie 3 et l'identité 4 de la personne 1 (étape 6). Cette association est enfin stockée sur un moyen d'identification associé à la personne 1. Le moyen d'identification est typiquement détenu par la personne elle-même, de sorte que cette dernière est la seule à posséder une trace de l'association entre sa biométrie 3 et son identité 4. Un tel moyen d'identification associé à une personne est couramment appelé un jeton (ou "token") biométrique. Il peut par exemple prendre la forme d'une carte d'identité sur laquelle les empreintes digitales de la personne ont été apposées.

La figure 2 montre une phase ultérieure de délivrance d'un droit. Une personne 2 prétendant à la délivrance d'un droit doit avoir fait l'objet d'un enrôlement préalable selon les principes illustrés sur la figure 1. On compare alors la biométrie 8 de cette personne avec celle qui a été conservée sur le jeton biométrique 9 associé à cette personne lors de son enrôlement. Si les biométries concordent (étape 10), on est alors capable de retrouver l'identité de la personne 2 de manière relativement fiable (étape 11) à partir de l'identité qu'elle avait déclinée, pour vérification, lors de son enrôlement, et qui a été stockée sur le jeton biométrique 9 en association avec la biométrie 8 de cette personne. On vérifie ensuite, à l'étape 12, si le droit en question a déjà été obtenu relativement à l'identité retrouvée. Pour cela, on recherche la présence de ladite identité dans une base de données 13 stockant les identités des personnes ayant acquis le droit en question. Si la personne 2 n'avait pas encore acquis le droit, ce dernier lui est finalement délivré à l'étape 14 et cette information est prise en compte dans la base de données 13.

Ce mode de fonctionnement fiabilise donc l'identification d'une personne, puisque l'identité déclinée par chaque personne et vérifiée lors de son enrôlement est retrouvée à partir des données biométriques propres à cette personne et du jeton biométrique préalablement remis à cette personne.

Toutefois, il ne garantit pas l'unicité de la délivrance de droits. En effet, une personne possédant plusieurs jetons biométriques, obtenus lors d'enrôlements successifs, pourra se voir délivrer un droit plusieurs fois, avec un jeton biométrique différent à chaque fois. Cela est particulièrement vrai lorsque la personne obtient plusieurs jetons biométriques avec des identités différentes pour chaque jeton, ce qui peut se produire notamment lorsque l'étape 5 de vérification de l'identité est de fiabilité faible.

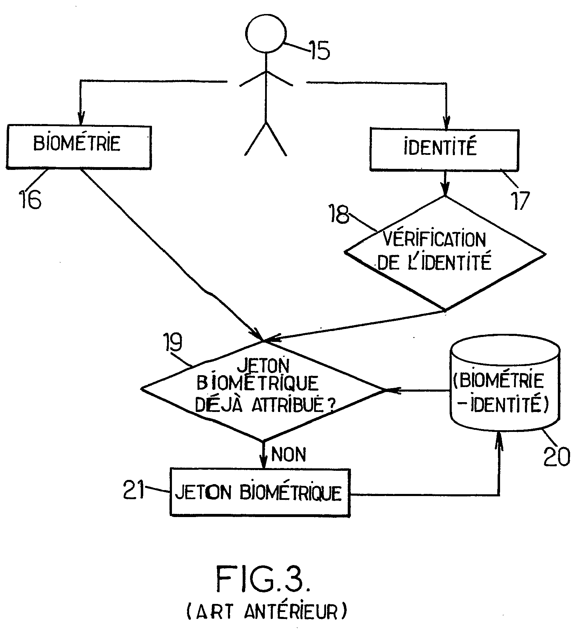

Une façon connue et efficace de remédier à ce problème consiste à stocker, dans une base de données centralisée, une association entre la biométrie et l'identité de chaque personne. La figure 3 illustre une phase d'enrôlement conforme à ce mode de fonctionnement. La personne 15 possède une biométrie 16 et décline une identité 17 qui fait l'objet d'une vérification à l'étape 18. On vérifie à l'étape 19 si un jeton biométrique a déjà été attribué à la personne 15 en recherchant la présence de l'identité déclinée 17 dans la base de données 20 des identités mémorisant les couples biométrie-identité des personnes pour lesquelles un jeton biométrique a déjà été généré. Si la personne 15 n'avait pas encore de jeton biométrique, on lui en génère alors un à l'étape 21, ce qui garantit qu'un seul jeton biométrique est généré pour chaque personne. La base de données 20 est enfin mise à jour pour prendre en compte la génération du nouveau jeton.

Par la suite, on peut délivrer un droit comme dans le cas illustré à la figure 2, si besoin est.

Toutefois, le mode de fonctionnement illustré sur la figure 3 nécessite la mise en correspondance, dans une base de données 20, de données biométriques et d'identités de personnes. Une telle correspondance est peu souhaitable car elle pourrait être utilisée à d'autres fins que la simple délivrance de droits et aller ainsi à l'encontre de la liberté individuelle. Elle serait même contraire à des dispositions légales pour la protection de la liberté individuelle dans certains pays.

Le document US 5,790,668 décrit un procédé pour empêcher une dupliciation d'un enrôlement tout en assurant le secret des individus dont les profils sont stockés dans la base de données.

Un but de la présente invention est de limiter les inconvénients susmentionnés, en autorisant une identification de personnes qui n'entrave pas la liberté individuelle.

Un autre but de l'invention est de mieux fiabiliser l'unicité des moyens d'identification associés à des personnes, en vue par exemple d'assurer un contrôle de la délivrance de droits à ces personnes, sans pour autant créer de base de données reliant pour chaque personne, sa biométrie et son identité.

Un autre but de l'invention est de limiter les possibilités de fraude lors de la délivrance de droits.

Un autre but encore de l'invention est de permettre un contrôle de la délivrance de droits à des personnes sans considération de leur identité.

L'invention propose ainsi un procédé de contrôle d'identification de personnes, comprenant une phase de génération d'un moyen unique d'identification associé à au moins une personne comprenant les étapes suivantes:
/al détecter des données biométriques relatives à ladite personne;
/b/ rechercher une concordance entre les données biométriques relatives à ladite personne et des données biométriques préalablement mémorisées dans une base de données biométriques, lesdites données biométriques préalablement mémorisées étant relatives à des personnes pour lesquelles des moyens d'identification ont été préalablement générés; et, lorsque aucune concordance n'a été trouvée:
/c/ générer un moyen d'identification associé à ladite personne à partir des données biométriques relatives à ladite personne et d'au moins une identité de ladite personne.

L'étape lb/ du procédé permet ainsi de s'assurer qu'un moyen d'identification, par exemple un jeton biométrique, n'a pas déjà été associé à la personne considérée dans le passé. On limite ainsi les possibilités, pour une même personne, d'obtenir plusieurs moyens d'identification.

Selon un mode de réalisation avantageux de l'invention, le procédé comprend en outre une seconde phase de délivrance d'au moins un droit à o ladite personne, dans laquelle: le/ ladite personne s'identifie à l'aide du moyen d'identification qui lui a été préalablement associé ; et If/ on délivre ledit droit à ladite personne lorsque ledit droit n'a pas déjà été délivré à ladite personne un nombre de fois égal à un nombre prédéterminé.

La délivrance de droits étant soumise à identification de la personne à partir du moyen unique d'identification préalablement généré pour ladite personne, on évite ainsi que la personne puisse se voir délivrer des droits plusieurs fois en s'identifiant à partir de moyens d'identification distincts.

Les phases du procédé sont appliquées à au moins une personne, c'est-à-dire qu'un jeton biométrique est associé à une personne donnée ou à un groupe de personnes données. De même, le ou les droits sont délivrés à une personne donnée ou à un groupe de personnes données.

Dans un mode de réalisation particulier de l'invention, une vérification de l'identité de la personne est effectuée avant l'étape lb/.

La délivrance du droit est effectuée sur la base d'un identifiant, qui peut être l'identité de ladite personne ou bien un identifiant du jeton biométrique qui lui a été associé (mode anonyme).

Dans un mode de réalisation particulier de l'invention, on révoque l'identifiant d'un jeton biométrique avant d'en générer un autre pour la même 2867881 -6-personne ou le même groupe de personnes. Cela peut par exemple se produire lorsque la personne prétend avoir perdu son premier jeton biométrique. On évite ainsi avantageusement les générations multiples de jetons pour une même personne ou un même groupe de personnes, pouvant entraîner des délivrances multiples de droits pour ces personnes.

Dans des modes de réalisation particuliers de l'invention, une clé est calculée pour chaque personne, puis associée à son identité. Il peut s'agir par exemple d'une clé biométrique calculée à partir d'éléments biométriques de la personne, mais faiblement discriminante pour qu'on ne puisse pas facilement o retrouver la personne à partir de sa clé. Cette clé peut aussi être générée de façon aléatoire, auquel cas elle est en outre associée à la biométrie de la personne considérée.

L'invention propose en outre un système, comprenant des moyens pour mettre en oeuvre le procédé susmentionné.

Lorsque seule la première phase du procédé est mise en oeuvre, le système peut alors s'apparenter à un dispositif.

Lorsque, en revanche, le procédé comprend la première phase de génération d'un moyen unique d'identification associé à au moins une personne, ainsi qu'une deuxième phase de délivrance d'au moins un droit à cette personne, le système peut alors comprendre des moyens fonctionnels aptes à mettre en oeuvre chacune des deux phases du procédé au sein d'un même équipement, ou bien des entités physiques distinctes assurant chacune la mise en oeuvre d'une des deux phases principales du procédé.

D'autres particularités et avantages de la présente invention apparaîtront dans la description ci-après d'exemples de réalisation non limitatifs, en référence aux dessins annexés, dans lesquels:
- la figure 1 est un schéma, déjà commenté, montrant un mode connu d'enrôlement d'une personne;
- la figure 2 est un schéma, déjà commenté, montrant un mode connu de délivrance de droits à une personne;
- la figure 3 est un schéma, déjà commenté, montrant un autre mode connu d'enrôlement d'une personne;
- la figure 4 est un schéma montrant un mode d'enrôlement d'une personne selon l'invention;
- la figure 4A est un schéma montrant une première phase d'un mode d'enrôlement d'une personne selon l'invention;
- la figure 4B est un schéma montrant une seconde phase d'un mode d'enrôlement d'une personne selon l'invention;
- la figure 5 est un schéma montrant un exemple de délivrance de droit à une personne en fonction de son identité,
- la figure 6 est un schéma montrant un mode de délivrance de droit à une personne indépendamment de son identité, selon l'invention;
- la figure 7 est un schéma montrant un mode d'enrôlement d'une personne, selon un mode de réalisation particulier de l'invention;
- la figure 8 est un schéma montrant un mode de délivrance de droit à une personne en fonction de son identité, selon un mode particulier de l'invention;
- la figure 9 est un schéma montrant un mode de délivrance de droit à une personne indépendamment de son identité, selon un mode de réalisation particulier de l'invention;
- les figures 10 et 11 sont des schémas montrant des modes d'enrôlements d'une personne selon d'autres modes de réalisations de l'invention;
- la figure 12 est un schéma simplifié d'un système permettant la délivrance de droits selon l'invention.

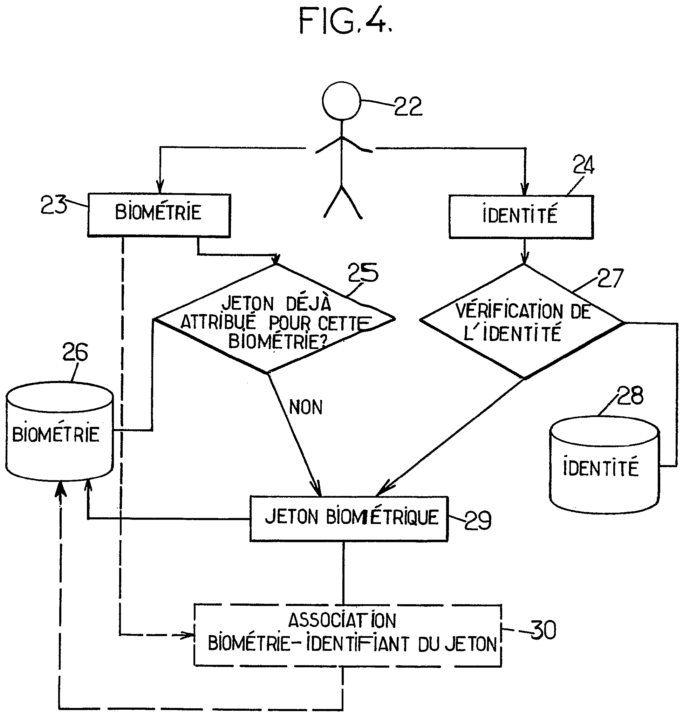

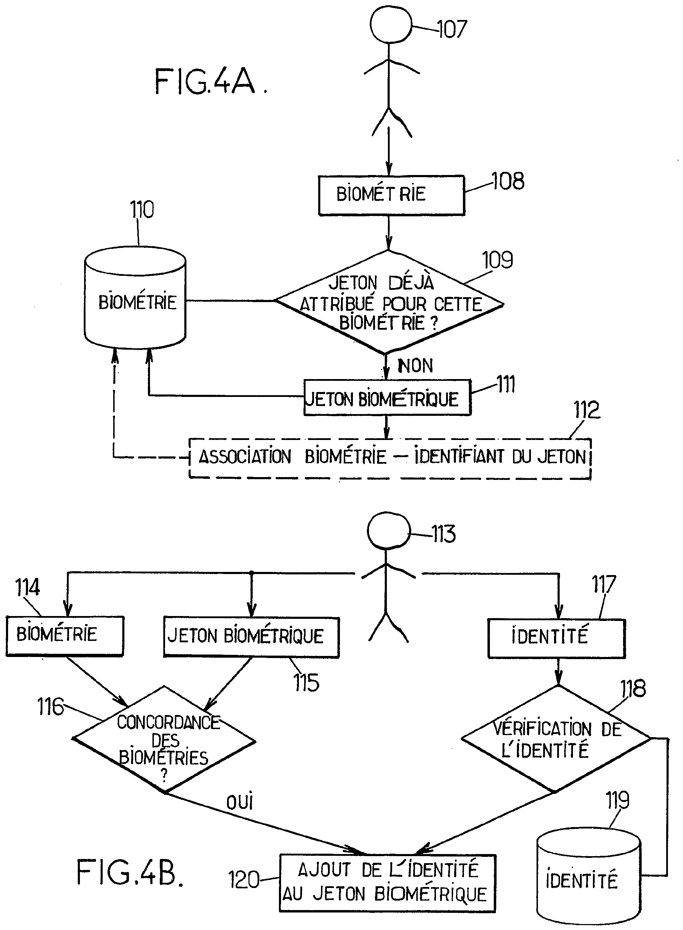

La figure 4 est un schéma de principe illustrant une phase d'enrôlement selon l'invention, pouvant éventuellement précéder une délivrance de droits. Cette phase d'enrôlement consiste à générer un moyen unique d'identification d'une personne 22, de manière à éviter les problèmes de génération de moyens d'identification multiples à une même personne comme cela a été exposé en introduction.

Selon cette figure, la personne 22 dispose de données biométriques qui lui sont propres, cette biométrie 23 de la personne 22 est détectée puis comparée à un ensemble de biométries mémorisées dans une base de données biométriques 26, correspondant à des données biométriques de personnes ayant déjà fait l'objet d'un enrôlement, c'est-à-dire ayant déjà obtenu un moyen d'identification. Si la biométrie 23 de la personne 22 concorde avec l'une des biométries stockées dans la base de données 26, cela signifie que la personne 22 a déjà fait l'objet d'une enrôlement, et donc a déjà reçu un jeton biométrique. Dans ce cas, on peut par exemple décider de ne pas re-générer un jeton biométrique pour cette personne 22, ou bien de procéder à des vérifications supplémentaires. Lorsqu'à l'étape 25, aucune concordance n'a été trouvé entre la biométrie 23 et les biométries stockées dans la base 26, cela signifie que la personne 22 n'a pas encore fait l'objet d'un o enrôlement, et cela justifie la génération d'un moyen d'identification pour cette personne 22. On notera que l'étape de vérification 25 est particulièrement fiable car elle est basée sur des données biométriques qui caractérisent littéralement la personne considérée.

Par ailleurs, la personne 22 souhaitant suivre une procédure d'enrôlement, décline son identité 24. Cette identité fait alors l'objet d'une vérification à l'étape 27, cette vérification pouvant être de natures diverses. On peut par exemple vérifier la présence de l'identité déclinée 24 dans une base de données 28 contenant des informations d'identité sur toutes les personnes susceptibles de se présenter pour un enrôlement.

Le jeton biométrique 29 finalement généré pour la personne 22 est formé à partir de la biométrie 23 et de l'identité 24 de cette personne. Par exemple, ce jeton comprend des éléments de la biométrie 23, des éléments de l'identité 24, ainsi qu'un identifiant unique de jeton. Il peut s'agir par exemple d'une carte d'identité sur laquelle ont été apposées des empreintes digitales de la personne 22.

Ainsi, l'enrôlement illustré sur la figure 4 permet de générer un moyen d'identification qui est unique pour une personne donnée, dans la mesure où l'on vérifie dans une étape 25 si la personne considérée a déjà obtenu un jeton. On évite ainsi de délivrer plusieurs jetons biométriques à une même personne, ce qui limite les possibilités ultérieures d'utilisation de ces différents jetons, par exemple afin d'obtenir la délivrance de plusieurs droits sur la base des différents jetons biométriques obtenus par cette personne.

Après la génération du jeton biométrique 29 associé à la personne 22, la base de données 26 est avantageusement mise à jour pour prendre en compte la biométrie 23, de manière à ce que la personne 22 ne puisse plus obtenir un jeton biométrique lors d'une nouvelle procédure d'enrôlement ultérieure, une fois le jeton biométrique 29 obtenu.

Selon l'invention, la base de données biométriques 26 stocke non seulement des éléments de biométrie, mais également des identifiants de jetons. Ainsi, chaque biométrie mémorisée dans la base 26 est associée à un identifiant de jeton biométrique délivré à la personne possédant ladite biométrie. On garde ainsi un lien entre la biométrie vérifiée et le jeton délivré, sans toutefois que ce lien permette une correspondance directe entre biométrie et identité en dehors du jeton. En effet, l'identifiant d'un jeton biométrique n'est pas conservée dans la base de données de vérification des identités, mais il est par exemple incorporé au jeton biométrique lui-même.

Dans ce mode de réalisation, il convient donc, en référence à la figure 4, une fois le jeton biométrique 29 généré pour la personne 22, d'associer la biométrie 23 de la personne 22 avec un identifiant du jeton biométrique 29 (étape 30), puis de stocker l'identifiant du jeton 29 en association avec la biométrie 23 dans la base de données biométriques 26.

On notera que, dans l'exemple décrit en référence à la figure 4, un jeton biométrique 29 a été généré pour être associé à une personne 22. Cependant, il est également possible de générer un jeton biométrique pour un ensemble de personnes. Par exemple, un jeton unique peut être généré pour un groupe de personnes ayant un lien entre eux, tel qu'une famille. Dans ce cas, le jeton biométrique généré portera avantageusement des éléments de biométrie et d'identité relatifs à chacune des personnes du groupe.

Les figures 4A et 4B illustrent une variante de réalisation pour la phase d'enrôlement, dans laquelle le moyen unique d'identification associé à une 30 personne ou à un groupe de personnes donné est généré en deux temps.

La personne 107 de la figure 4A possède une biométrie 108. Comme dans le cas précédent, on recherche, dans une étape 109, si un jeton a déjà été attribué pour cette biométrie 108, par exemple en vérifiant la présence de cette biométrie dans une base de données des biométries 110. Si aucun jeton n'a encore été attribué à la biométrie 108, on en génère un à partir de la biométrie 108 de la personne 107, et on met avantageusement à jour la base de données 110. Ainsi, le jeton biométrique 111 est obtenu à partir de données biométriques uniquement à ce stade. Selon l'invention, l'identifiant du jeton 111 est associé à la biométrie 108 (étape 110), et cette association est avantageusement mise à jour dans la base de données 110.

Dans un second temps, une personne 113, qui peut par exemple être o la même personne que la personne 107 de la figure 4A, peut faire ajouter une identité sur le jeton biométrique qui lui a été préalablement associé. Ainsi, la personne 113 de la figure 4B présente le jeton biométrique 115 qui lui a été préalablement associé. Une vérification est faite à l'étape 116, pour s'assurer que le jeton biométrique 115 est à juste titre en possession de la personne 113.

A cet effet, on vérifie la concordance entre la biométrie 114 de la personne 113 et la biométrie à partir de laquelle le jeton biométrique 115 a été généré, cette information étant avantageusement inscrite sur le jeton 115. Par ailleurs, la personne 113 décline son identité 117. Cette dernière fait l'objet d'une vérification à l'étape 118, par exemple par recherche de cette identité dans une base de données des identités 119. Après vérifications, l'identité 117 est ajoutée sur le jeton biométrique 115 (étape 120).

L'enrôlement selon ce mode de réalisation consiste ainsi en deux phases indépendantes et asynchrones. Le jeton biométrique associé à une personne est finalement généré à partir de données biométriques et de données d'identité, mais ces données ont pu être dévoilées et inscrites à des moments différents.

En outre, il est possible de mettre en oeuvre à plusieurs reprises la seconde phase d'un tel enrôlement (illustrée à la figure 4B), de manière à inscrire plusieurs identités de nature différente sur un même jeton biométrique.

Par exemple, une identité peut se rapporter à un état civil de la personne concernée, tandis qu'une autre identité est une identité professionnelle.

Une personne possédant un jeton biométrique, qui lui a été délivré par exemple à l'issue d'une procédure enrôlement telle qu'illustrée sur la figure 4, peut alors prétendre à la délivrance d'un ou plusieurs droits. Cette délivrance peut être effectuée en raison de l'identité de la personne qui revendique un droit, ou bien indépendamment de son identité.

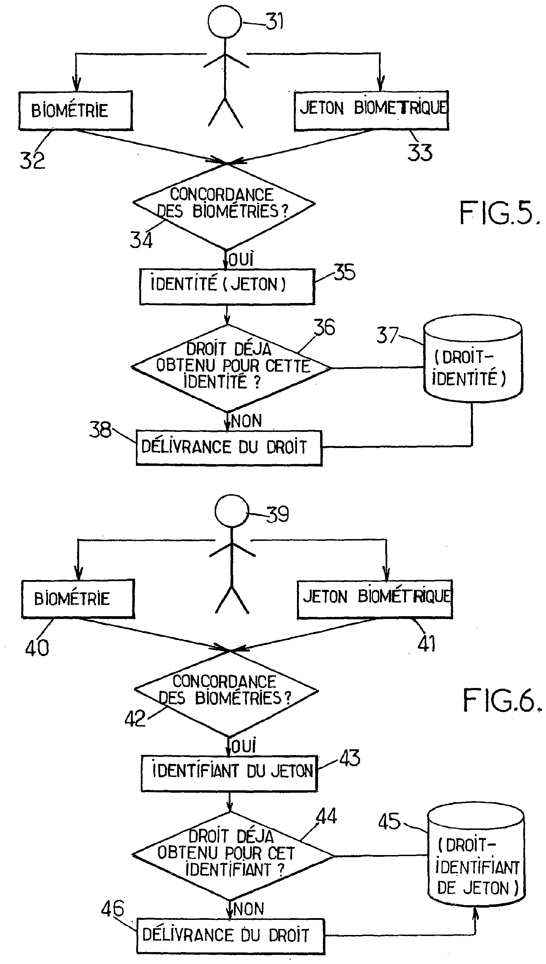

La figure 5 illustre un exemple non revendiqué de cas de délivrance d'un droit à une personne sur la base de son identité. La personne 31 qui revendique un droit peut être par exemple la même personne que la personne 22 qui a subi préalablement une procédure d'enrôlement. Elle possède une biométrie 32 ainsi qu'un jeton biométrique 33 qui lui a été préalablement associé. On vérifie alors, dans une étape 34, si la biométrie 32 de la personne 31 et la biométrie stockée sur le jeton biométrique 33 présentée par la personne 31 concordent bien entre elles. Si ce n'est pas le cas, cela signifie que le jeton biométrique 33 présenté par la personne 31 n'a pas été généré pour cette personne et ne lui est donc pas associé. Aucun droit n'est alors délivré dans ce cas de figure.

En revanche, si la biométrie 32 de la personne 31 et la biométrie à partir de laquelle le jeton biométrique 33 a été généré concordent, cela signifie que le jeton 33 est à juste titre en possession de la personne 31. L'identité de la personne 31 est retrouvée à partir du jeton biométrique sur lequel elle est inscrite (étape 35). On vérifie alors que le droit revendiqué n'a pas déjà été délivré à la personne 31 sur la base de son identité (étape 36). A cet effet, on vérifie la présence, dans une base de données 37 des identités, stockant les identités de toutes les personnes ayant déjà obtenu le droit considéré, de l'identité retrouvée à l'étape 35. On notera que lorsque la délivrance peut concerner un ensemble de droits distincts, la base de données 37 des identités stocke les identités des personnes ayant déjà obtenu la délivrance d'un droit parmi l'ensemble de droits, en relation avec ce droit, de manière à ne pas empêcher une personne ayant déjà obtenu un droit dudit ensemble de droits de s'en voir délivrer un autre ultérieurement.

Si l'identité retrouvée à l'étape 35 n'apparaît pas dans la base 37, en relation avec le droit revendiqué par la personne 31, cela signifie que cette personne ne s'est pas encore vu délivrer le droit qu'elle revendique. La délivrance de ce droit est alors réalisée à l'étape 38. Dans le cas contraire, aucun droit n'est délivré à la personne 31, puisque celle-ci l'a déjà obtenu préalablement. Lorsque le droit revendiqué par la personne 31 est délivré à l'étape 38, la base de données 37 est alors mise à jour pour prendre en compte cette information, c'est-à-dire que l'identité 35 de la personne 31 est stockée dans la base 37 en relation avec le droit délivré.

Dans l'exemple décrit en référence à la figure 5, on cherche à ne délivrer un droit à une personne donnée qu'une seule fois. Cependant, il est également envisageable de délivrer un droit en un nombre prédéterminé de fois pour une personne donnée ou un groupe de personnes données. Dans ce o cas, il peut être avantageux de stocker en outre, dans la base de données 37, une indication relative au nombre de délivrances effectives d'un droit pour chaque identité en relation avec ledit droit. On vérifie alors à l'étape 36 si le droit revendiqué par la personne 31 a déjà été obtenu pour l'identité retrouvée à l'étape 35, un nombre de fois égal au nombre prédéterminé. On s'assure ainsi que le droit ne sera pas délivré à la personne 31 un nombre de fois supérieur audit nombre prédéterminé.

La figure 6 illustre un mode de réalisation selon l'invention de la phase de délivrance d'un ou plusieurs droits pour une ou plusieurs personnes dans lequel la délivrance est effectuée indépendamment de l'identité de la personne. Une personne 39 ayant une biométrie 40 et possédant un jeton biométrique 41, revendique un droit. Comme dans le cas précédent, la biométrie 40 et celle à partir de laquelle le jeton biométrique 41 a été obtenu, par exemple dans une procédure d'enrôlement, et qui est avantageusement stockée sur le jeton 41, sont comparées à l'étape 42. Si les biométries concordent, cela signifie que le jeton biométrique 41 est à juste titre associé à la personne 39. On détecte alors dans une étape 43, l'identifiant du jeton biométrique 41, qui est avantageusement inscrit sur le jeton biométrique lui-même.

Puis on vérifie à l'étape 44 si le droit revendiqué par la personne 39 a déjà été obtenu pour un tel identifiant de jeton. A cet effet, on consulte avantageusement une base de données 45 stockant les identifiants de jetons de toutes les personnes ayant obtenu un droit, l'identifiant de jetons étant stocké en relation avec le droit délivré pour cet identifiant. Lorsque le droit n'a 2867881 -13- pas encore été obtenu pour un tel identifiant, le droit revendiqué par la personne 39 lui est alors délivré lors d'une étape 46, puis cette information de délivrance est prise en compte par l'ajout de l'identifiant du jeton obtenu à l'étape 43 dans la base de données 45 en relation avec le droit délivré.

Ainsi, le droit revendiqué par la personne 39 lui a été délivré sans que l'identité de cette personne ne soit jamais détectée ni stockée. Ce mode de réalisation est particulièrement intéressant lorsque le droit peut être revendiqué par un ensemble de personnes en raison de leur qualité, par exemple les membres d'une association de personnes anonymes.

Comme dans le cas décrit en référence à la figure 5, le droit délivré à la personne 39 selon le mode de réalisation de la figure 6, pourrait être délivré en un nombre prédéterminé de fois, plutôt que de façon unique. Dans ce cas, le nombre de délivrances d'un droit pour un même identifiant de jeton, fait avantageusement l'objet d'une entrée supplémentaire dans la base de données 45.

La délivrance d'un droit selon les modes de réalisation illustrés sur les figures 5 et 6 est donc contrôlée, dans la mesure où chaque personne demandant la délivrance d'un droit obtient un jeton biométrique unique lors d'une phase préalable d'enrôlement, puis le droit lui est délivré de manière conditionnelle grâce à des informations disponibles à partir de ce jeton biométrique. On augmente ainsi les chances de ne délivrer un droit qu'un nombre prédéterminé de fois à une même personne.

En outre, le mécanisme décrit plus haut permet une séparation efficace des données biométriques d'une part et de l'identité des personnes d'autre part. En effet, aucune des bases de données utilisées dans la phase d'enrôlement, comme dans la phase de délivrance de droits, ne contient à la fois des informations de biométrie et des informations relatives à des identités de personnes. Seul le jeton biométrique généré lors de la phase d'enrôlement relativement à une personne donnée, contient un lien entre la biométrie et l'identité de cette personne, si bien que ce lien n'est généralement disponible qu'auprès de ladite personne.

En ce qui concerne les moyens de mise en oeuvre de l'invention, une première entité 105 peut être chargée de la mise en oeuvre de la phase d'enrôlement. Dans ce cas, cette entité 105 est alors un dispositif qui se confond avec le système global 104.

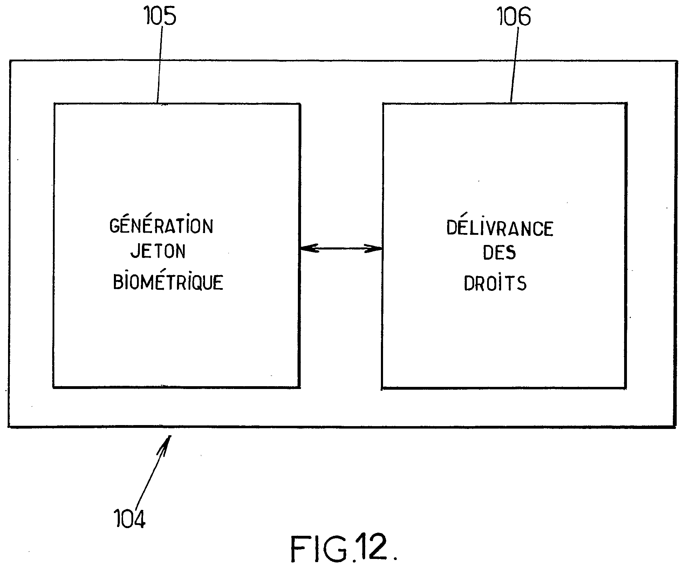

Si la seconde phase de délivrance de droits est en outre mise en oeuvre, une deuxième entité 106 se charge de délivrer des droits, comme cela a été représenté schématiquement sur la figure 12. Le système global 104 est alors constitué des deux entités distinctes 105 et 106 et il permet la délivrance de droits. Chacune des entités, au sein du système 104, peut fonctionner de façon indépendante, c'est-à-dire qu'une personne peut demander dans un premier temps qu'on lui affecte un jeton biométrique. Cette opération est alors réalisée à l'aide de l'entité 105. Puis, elle peut demander la délivrance d'un droit à la suite immédiate de son enrôlement, ou, au contraire, bien après son enrôlement. La délivrance du droit est alors effectuée par l'entité 106. Dans d'autres modes de réalisation exposés ci-après, des interactions sont possibles entre les deux entités 105 et 106.

En variante, le système 104, permettant la délivrance des droits, peut regrouper dans un équipement unique des premiers moyens fonctionnels aptes à mettre en oeuvre la phase d'enrôlement décrite ci-dessus (105 désigne alors ces premiers moyens fonctionnels), et des seconds moyens fonctionnels aptes à délivrer des droits conformément à la deuxième phase décrite ci-dessus (106 désigne alors ces seconds moyens fonctionnels).

Les modes de réalisation de l'invention décrits plus haut, ne permettent cependant pas d'annuler totalement le risque qu'une personne puisse se voir associer plusieurs jetons biométriques, et éventuellement se faire ensuite délivrer plusieurs fois un même droit, et ce, en déclarant plusieurs identités différentes.

En effet, si la personne 22 de la figure 4 a obtenu un jeton biométrique unique 29 à l'issue d'une phase d'enrôlement, puis prétend avoir perdu son jeton 29, il lui est possible de subir une nouvelle phase d'enrôlement au cours de laquelle elle décline une nouvelle identité, différente de l'identité 24 précédemment déclarée. Si l'étape de vérification de l'identité 27 n'est pas suffisamment fiable, comme c'est parfois le cas en réalité, il est possible que la personne 22 obtienne un nouveau jeton biométrique généré à partir de sa biométrie 23 et de la nouvelle identité qu'elle a déclarée. Cette même personne peut alors obtenir la délivrance d'un droit qu'elle avait déjà obtenu, par exemple selon les principes décrits en référence à la figure 5 ou à la figure 6, puisque aucun droit n'a encore été délivré pour la nouvelle identité déclarée par la personne 22, ni pour l'identifiant du jeton nouvellement obtenu par cette personne.

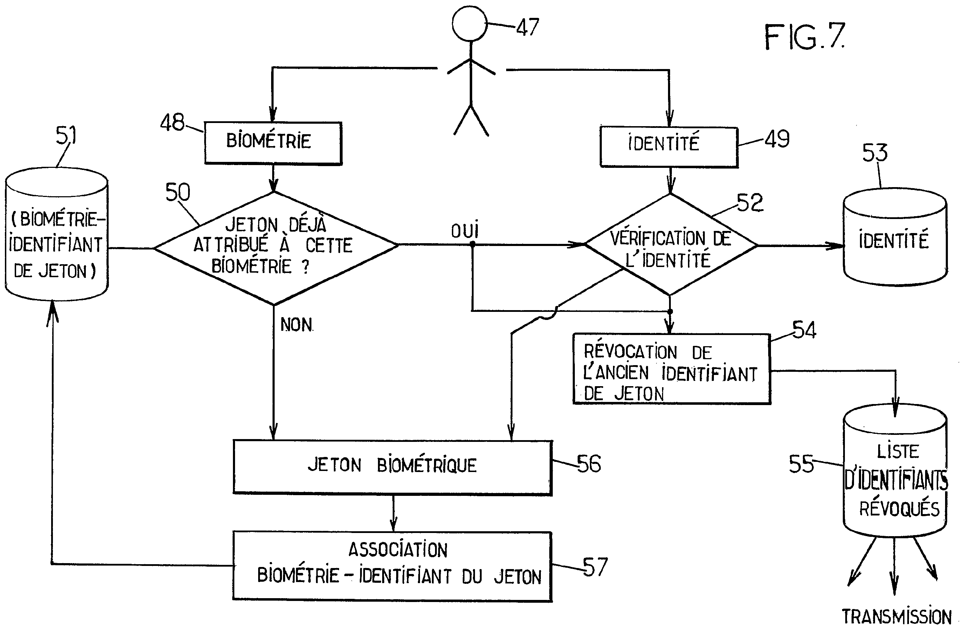

La figure 7 montre un mode de réalisation de la phase d'enrôlement visant à interdire la génération de plusieurs jetons biométriques pour une même personne sur la base d'identités différentes, et donc à réduire les risques de délivrance multiple d'un même droit à cette même personne, sur la base de ses différentes identités déclarées. Ainsi, selon la figure 7, la personne 47 peut obtenir un premier jeton biométrique unique 56 sur la base de sa biométrie 48 et de l'identité 49 qu'elle décline lors de son premier enrôlement, de façon similaire à ce qui avait été décrit en référence à la figure 4. On considère désormais que cette même personne 47 tente de sa faire attribuer un nouveau jeton biométrique en déclinant une nouvelle identité 49. Dans ce cas, on détecte à l'étape 50 qu'un jeton biométrique a déjà été attribué à cette personne en retrouvant la biométrie 48 de la personne 47 dans la base de données 51 stockant les biométries des personnes ayant déjà obtenu un jeton, ces biométries étant associées dans la base à un identifiant du jeton respectif.

On vérifie alors la nouvelle identité 49 déclinée par la personne 47 à l'étape 52. Etant donnés les risques existants que la personne 47 décline une identité 49 différente de celle qu'elle avait déclinée lors de son premier enrôlement, la vérification de l'identité de l'étape 52 est avantageusement effectuée avec une fiabilité accrue dans ce cas, par exemple en interrogeant une base de données 53 des identités contenant des informations multiples sur l'identité des personnes. Si l'identité 49 déclinée par la personne 47 est erronée, on peut alors choisir de ne pas générer de nouveau jeton biométrique pour cette personne.

En outre, lorsque l'étape 50 a révélé qu'un jeton avait déjà été attribué à la personne 47, on révoque l'identifiant du jeton biométrique qui avait été 2867881 -16-préalablement obtenu par cette personne 47 (étape 54). Cette révocation peut être faite en inscrivant l'ancien identifiant de jeton associé à la personne 47, c'est-à-dire l'identifiant du jeton biométrique précédemment obtenu par la personne 47, dans une liste d'identifiants révoqués 55.

Cette liste peut être stockée dans une base de donnée. Lorsque le système permettant la délivrance des droits comprend deux entités distinctes (une pour générer les jetons et une autre pour délivrer effectivement les droits), la base de données contenant la liste d'identifiants révoqués 55 doit être consultable par l'entité chargée de la délivrance des droits (entité 106 sur la figure 12).

En variante, la liste d'identifiants révoqués 55 constituée par l'entité mettant en oeuvre la phase d'enrôlement (entité 105 sur la figure 12) est transmise à l'entité chargée de la délivrance des droits (entité 106 sur la figure 12). Cette transmission peut se faire selon des modes divers. Par exemple, elle peut être faite de manière périodique, la liste complète des identifiants révoqués étant transmise à chaque période, ou bien seuls les identifiants révoqués ajoutés à la liste 55 depuis la dernière période sont transmis lors d'une nouvelle période. Il est encore possible de transmettre chaque identifiant révoqué à l'entité chargée de la délivrance des droits dès l'ajout de cet identifiant dans la liste 55, de façon à avoir une transmission instantanée des identifiants révoqués.

La révocation de l'identifiant du jeton biométrique préalablement généré pour la personne 47 permet ainsi d'éviter que la personne 47 puisse disposer de deux jetons biométriques différents en vigueur.

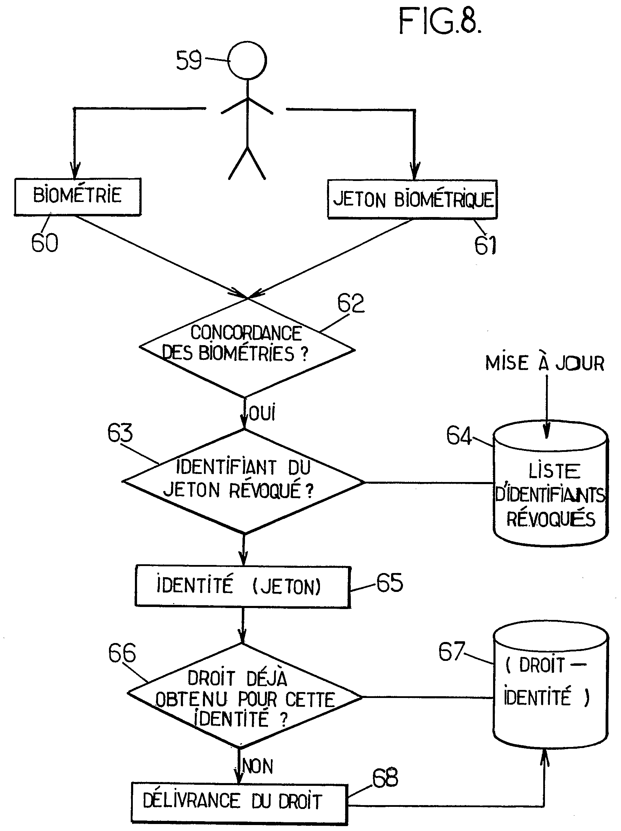

Une délivrance des droits ultérieure est alors conditionnée par le fait que le jeton biométrique présenté par une personne est bien en vigueur. La figure 8 illustre un tel mode de délivrance d'un droit. Une personne 59 ayant une biométrie 60 ainsi qu'un jeton biométrique 61 revendique la délivrance d'un ou plusieurs droits. Comme dans les cas de délivrance décrits plus haut, on vérifie à l'étape 62 une concordance entre la biométrie 60 et celle stockée sur le jeton biométrique 61 généré lors d'une phase d'enrôlement préalable. Lorsque les biométries concordent, on vérifie, dans une étape 63, si l'identifiant du jeton biométrique 61 associé à la personne 59 est en vigueur ou bien s'il a été précédemment révoqué. A cet effet, on vérifie dans une liste d'identifiants révoqués 64 la présence ou l'absence de l'identifiant du jeton biométrique 61.

La liste d'identifiants révoqués 64 est obtenue à partir de la liste d'identifiants révoqués 55. Par exemple, lorsque la liste d'identifiants révoqués 55 a été stockée dans une base de données accessible depuis l'entité (physique ou fonctionnelle) chargée de la délivrance des droits, la liste 64 est alors la même que la liste 55, et il suffit de consulter ladite base de données pour conclure à la révocation ou non du jeton biométrique considéré. En o alternative, la liste 64 est différente de la liste 55, mais elle est mise à jour à partir de cette dernière lors de transmission d'identifiants révoqués vers un espace mémoire de l'entité chargée de la délivrance des droits, ladite transmission pouvant être instantanée ou périodique, partielle ou complète, comme indiqué plus haut.

Si on conclut, à l'étape 63, que l'identifiant du jeton biométrique 61 utilisé par la personne 59 a été révoqué, on peut alors choisir de ne pas délivrer le droit revendiqué à la personne 59. Au contraire, si l'identifiant du jeton biométrique 61 associé à la personne 59 est bien en vigueur, on procède alors comme dans le cas décrit précédemment en référence à la figure 5, pour délivrer le droit à la personne 59 lors d'une étape 68, après avoir vérifié que l'identité 65 de la personne 59 inscrite sur le jeton biométrique 61 n'a pas déjà fait l'objet de la délivrance du même droit, une fois ou, plus généralement, un nombre prédéterminé de fois.

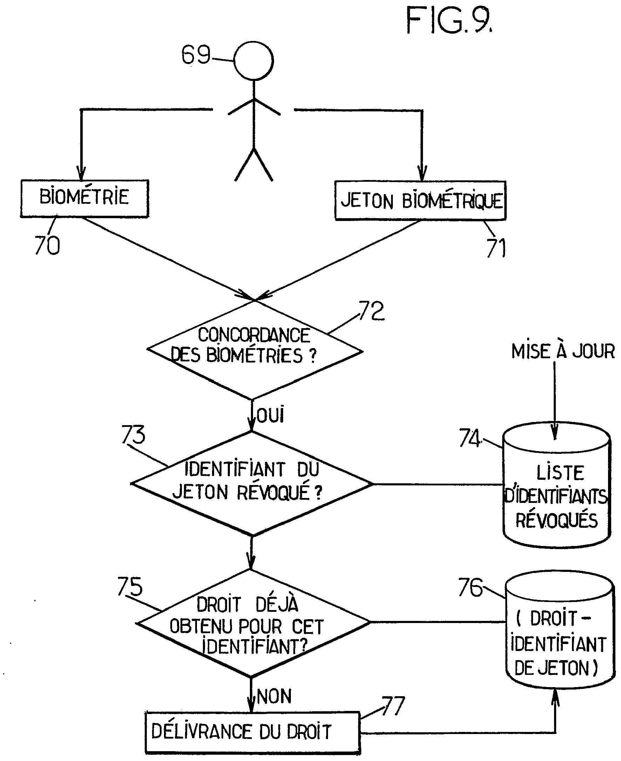

Dans le mode de réalisation illustré sur la figure 9, on délivre un droit revendiqué à une personne 69 sur la base de l'identifiant du jeton biométrique 71 qui lui est associé, comme dans le cas précédemment décrit en référence à la figure 6. Comme dans le cas illustré sur la figure 8, on vérifie à l'étape 73 que l'identifiant du jeton biométrique 71 n'a pas été précédemment révoqué, par interrogation d'une liste d'identifiants révoqués 74 établie à partir de la liste d'identifiants révoqués 55 précédemment décrite.

Dans les modes de réalisation de l'invention décrits plus haut, il n'est pas exclu qu'une personne puisse usurper l'identité d'une autre personne et 2867881 - 18- ainsi obtenir un jeton biométrique relatif à cette identité usurpée, au détriment de cette autre personne. Si la personne 47 de la figure 7 a obtenu un premier jeton biométrique 56, puis prétend l'avoir perdu, elle peut alors faire l'objet d'une nouvelle phase d'enrôlement au cours de laquelle elle décline l'identité d'une autre personne 47'. Si la vérification de l'identité de l'étape 52 n'est pas suffisamment fiable, il est alors possible que la personne 47 obtienne un nouveau jeton biométrique généré à partir de sa propre biométrie 48 et de l'identité de la personne 47'.

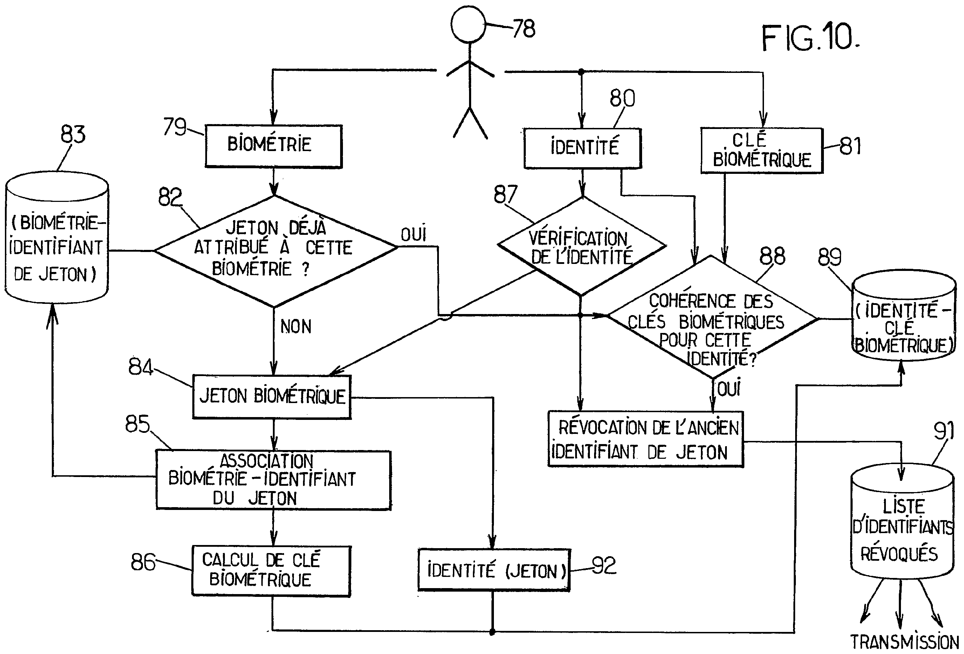

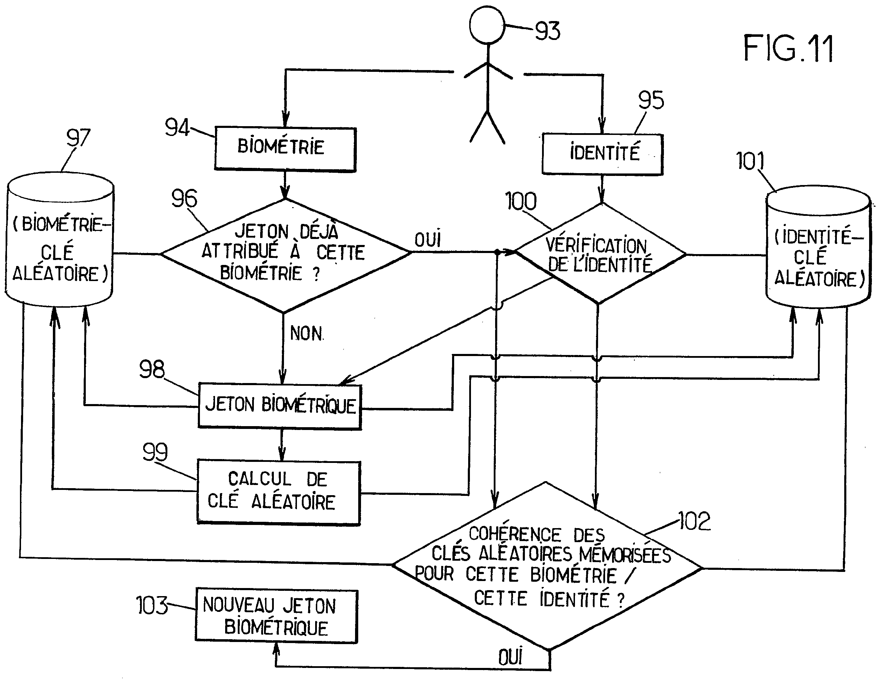

Pour éviter cette situation, on peut procéder selon l'un des modes de réalisation illustrés sur les figures 10 et 11. La figure 10 montre une personne 78 ayant une biométrie 79 et une identité 80 qu'elle décline pour vérification à l'étape 87. Si l'on constate, en recherchant la biométrie 79 dans une base de données 83 contenant les biométries de toutes les personnes ayant déjà obtenu un jeton, les biométries étant respectivement associées à des identifiants de jetons correspondants, que la personne 78 n'a jamais demandé la génération d'un jeton biométrique, on génère alors un jeton biométrique 84 à partir de la biométrie 79 de la personne 78 et de l'identité 80 qu'elle a déclaré et qui a été vérifié à l'étape 87. La biométrie 79 de la personne 78 est alors associée à l'identifiant du jeton biométrique 84 (étape 85) pour faire l'objet d'une nouvelle entrée dans la base de donnée 83.

En outre, on calcule une clé biométrique relative à la personne 78 (étape 86). Cette clé biométrique est un code généré de manière robuste et reproductible, susceptible de caractériser la personne 78 de manière suffisante pour que celle-ci ait une valeur de clé différente d'une autre personne quelconque avec un niveau de probabilité prédéterminé choisi, mais pas suffisamment caractérisante pour permettre de retrouver les données biométriques relatives à la personne 78.

A titre d'exemple, la clé biométrique peut prendre quelques dizaines ou quelques centaines de valeurs différentes, lorsque le nombre de personnes susceptibles de prétendre à la délivrance de droits est une population de quelques millions ou quelques dizaines de millions de personnes. Elle peut par exemple prendre comme valeur une lettre de l'alphabet entre A et Z (26 valeurs 2867881 -19-différentes) ou bien un nombre à 2 chiffres entre 00 et 99 (100 valeurs différentes). De façon avantageuse, le nombre de valeurs de la clé biométrique est adapté à la puissance de calcul nécessaire pour calculer par force brutale toutes les combinaisons.

La clé biométrique est calculée à partir d'éléments biométriques de la personne considérée. Par exemple, si les données biométriques 79 utilisées pour identifier la personne 78 sont des empreintes digitales, la clé biométrique calculée à l'étape 86 pour cette personne 78 peut être obtenue à partir d'un codage de la forme générale de chaque empreinte des doigts de cette personne 78, étant entendu que ce codage permet d'obtenir une répartition à peu près uniforme des codes pour les différentes formes possibles des empreintes des doigts. En variante, les données biométriques 79 de la personne 78, auxquelles on s'intéresse, sont relatives à l'iris de l'oeil de la personne 78. Dans ce cas, la clé biométrique pourrait être calculée avantageusement selon une opération statistique basée sur le codage de l'iris.

Une fois la clé biométrique calculée pour la personne 78, on retrouve l'identité de la personne 78 à partir du jeton 84 généré pour cette personne (étape 92). Puis on mémorise dans une base de données 89 la clé biométrique obtenue à l'étape 86, en la reliant à l'identité de la personne 78. Cela revient à dire que la base de donnée 89 stocke l'ensemble des identités des personnes susceptibles de demander la délivrance de droits, chaque identité étant associée à une clé biométrique de la personne correspondante. Dans ce cas de figure, des informations d'identités sont donc stockées en liaison avec des informations de biométrie. Cependant, étant donné le mode de calcul faiblement discriminant de la clé biométrique décrit plus haut, il n'est pas à craindre que la relation stockée dans la base 89 puisse permettre de retrouver l'identité d'une personne à partir de sa biométrie, ni inversement.

Si par la suite, la personne 78 usurpe l'identité d'une autre personne et souhaite se voir générer un jeton biométrique à partir de cette identité usurpée, on procède comme suit: après avoir détecté que la personne 78 s'était déjà fait attribuer un jeton biométrique (étape 82), on calcule la clé biométrique 81 associée à la personne 78. Puis, sur la base de l'identité 80 déclarée par la - 20 - personne 78, on effectue une vérification de cette identité, si possible de façon plus fiable que dans le cas courant (étape 87). Puis on compare, à l'étape 88, la clé biométrique 81 avec la clé biométrique associée à l'identité 80 déclinée par la personne 78 dans la base de données 89.

Si les clés biométriques comparées sont identiques, on peut alors en conclure avec un degré de certitude raisonnable que l'identité 80 est bien celle de la personne 78. En revanche, si les clés biométriques comparées sont différentes entres elles, l'identité 80 déclinée par la personne 78 est certainement usurpée. Dans ce dernier cas, on peut alors choisir de ne pas générer de nouveaux jetons biométriques à la personne 78 sur la base de cette identité usurpée.

Comme dans le mode de réalisation décrit plus haut en référence à la figure 7, on peut révoquer l'identifiant de l'ancien jeton biométrique associé à la personne 78 (étape 90), lorsque il a été conclu que l'identité 80 déclinée par la personne 78 était la bonne à l'issue des étapes 87 et 88. A cet effet, l'ancien identifiant de jeton est ajouté à une liste d'identifiants révoqués 91, éventuellement transmise à une entité (physique ou fonctionnelle) chargée de la délivrance effective des droits.

Dans une variante de réalisation, illustrée à la figure 11, une personne 93 se voit générer un jeton biométrique 98, tandis qu'aucun jeton biométrique n'avait été associé à cette même personne auparavant. Puis on calcule une clé aléatoire pour cette personne 93 (étape 99), que l'on stocke d'une part, dans une base de données biométriques 97, en relation avec la biométrie 94 de la personne 93, et d'autre part, dans une base de données des identités 101, en relation avec l'identité de la personne 93 obtenue à partir du jeton biométrique 98 généré pour cette personne.

Si la personne 93 subit une nouvelle phase d'enrôlement, on détecte à l'étape 96 qu'un jeton biométrique a déjà été associé à cette personne dans le passé, par consultation de la base de données 97, sur la base de la biométrie 94. Puis on effectue une vérification particulièrement soignée de l'identité 95 déclinée par la personne 93 (étape 100). Et on effectue une comparaison entre les clés aléatoires mémorisées dans la base de données 97 pour la biométrie 94, et dans la base de données 101 pour l'identité déclinée 95 (étape 102).

Si les clés aléatoires mémorisées dans les bases de données 97 et 101 respectivement, ne sont pas cohérentes entres elles, on peut en conclure avec un degré raisonnable de certitude que l'identité 95 déclinée par la personne 93 lors de ce second enrôlement a été usurpée et correspond donc à l'identité d'une autre personne ayant déjà subi elle-même une phase d'enrôlement.

A l'inverse, si l'étape 102 indique que les clés aléatoires mémorisées dans les bases de données 97 et 101 sont identiques, il est alors probable que l'identité 95 déclinée par la personne 93 lors de ce second enrôlement soit bien l'identité de cette personne, et non une identité usurpée. Dans ce cas, on peut choisir de générer un nouveau jeton biométrique 103 à l'attention de la personne 93, en remplacement du jeton qui lui avait été préalablement attribué.

Bien que cela ne soit pas été représenté sur cette figure, il est bien sûr possible comme dans les cas décrits plus haut, de révoquer l'identifiant de l'ancien jeton biométrique qui avait été associé à la personne 93, de manière à ce que cette personne ne dispose que d'un jeton en vigueur à la fois.

Dans le mode de réalisation de l'invention illustrée sur la figure 11, le calcul de la clé à l'étape 99 est totalement aléatoire, ce qui limite les risques de fraudes consistant à rechercher, à partir de données biométriques d'une personne, une clé correspondante.

On constate également dans ce dernier mode de réalisation qu'un champ identique (la clé aléatoire) est stockée à la fois dans une base de données biométriques 97 et dans une base de données d'identités 101.

Cependant, la clé aléatoire étant calculée de façon à être faiblement discriminante (elle peut prendre par exemple entre quelques dizaines et quelques centaines de valeurs différentes, comme dans le cas décrit plus haut), il est impossible pour une personne ayant accès aux bases de données 97 et 101 de retrouver avec certitude une correspondance entre la biométrie et l'identité d'une personne sur la seule base de la clé aléatoire.

## Revendications

1. Procédé de contrôle d'identification de personnes pour la délivrance de droits, comprenant une phase de génération d'un moyen unique d'identification (29, 56, 84, 98, 103, 111) associé à au moins une personne (22, 47, 78, 93, 107, 113) comprenant les étapes suivantes :
/a/ détecter des données biométriques (23, 48, 79, 94, 108) relatives à ladite personne ;
/b/ rechercher une concordance entre les données biométriques relatives à ladite personne et des données biométriques préalablement mémorisées dans une base de données biométriques (26, 51, 83, 97, 110), lesdites données biométriques préalablement mémorisées étant relatives à des personnes pour lesquelles des moyens d'identification ont été préalablement générés, sans pour autant contenir d'identités de personnes en association avec les données biométriques mémorisées; et,
lorsque aucune concordance n'a été trouvée :
/c/ générer un moyen d'identification (29, 56, 84, 98, 103, 111) associé à ladite personne à partir des données biométriques relatives à ladite personne et d'au moins une identité (24, 49, 80, 95, 117) de ladite personne,
/d/ ajouter les données biométriques relatives à ladite personne en association avec un identifiant unique dudit moyen d'identification (56, 84) associé à ladite personne (47, 78) dans la base de données biométriques,
le procédé comprenant en outre une seconde phase de délivrance d'au moins un droit à ladite personne (31, 39, 59, 69), dans laquelle :
/e/ ladite personne s'identifie à l'aide du moyen d'identification (33, 41, 61, 71) qui lui a été préalablement associé ; et
/f/ on délivre ledit droit à ladite personne lorsque ledit droit n'a pas déjà été délivré à ladite personne un nombre de fois égal à un nombre prédéterminé, en consultant dans une base de données de droits (45, 67, 76), des droits déjà délivrés à des personnes, sur la base de l'identifiant unique du moyen d'identification, cet identifiant étant incorporé dans ledit moyen d'identification associé à ladite personne.

2. Procédé selon l'une quelconque des revendications précédentes, comprenant en outre une étape de vérification (27, 52, 87, 100, 118) de l'identité de ladite personne (22, 47, 78, 93, 113).

3. Procédé selon la revendication 2, dans lequel la vérification de l'identité est renforcée pour une personne pour laquelle une concordance a été trouvée à l'étape /b/.

4. Procédé selon l'une quelconque des revendications précédentes, dans lequel la génération, à l'étape /c/, d'un moyen d'identification associé à ladite personne (107) est effectuée d'abord à partir des données biométriques (108) relatives à ladite personne, puis complétée par l'ajout d'au moins une identité (117) de ladite personne.

5. Procédé selon l'une quelconque des revendications précédentes, dans lequel la phase de génération d'un moyen unique d'identification (84, 98, 103) associé à ladite personne (78, 93) comprend en outre les étapes suivantes :
- calculer une clé associée à ladite personne, la clé pouvant prendre un nombre de valeurs très inférieur au nombre de personnes susceptibles de requérir la génération d'un moyen unique d'identification, et suffisamment élevé pour que deux personnes quelconques se voient associer des clés différentes avec un niveau de probabilité prédéterminé ; et
- mémoriser ladite clé dans une base de données des identités (89, 101) en association avec une identité de ladite personne.

6. Procédé selon la revendication 5, dans lequel le nombre de valeurs de la clé est choisi de façon à tenir compte de la puissance de calcul nécessaire pour calculer par force brutale toutes les combinaisons.

7. Procédé selon la revendication 5 ou 6, dans lequel le nombre de valeurs de la clé est compris sensiblement entre quelques dizaines et quelques centaines lorsque le nombre de personnes susceptibles de requérir la génération d'un moyen unique d'identification est de quelques millions ou dizaines de millions.

8. Procédé selon l'une quelconque des revendications 5 à 7, dans lequel le calcul de la clé est effectué à partir de données biométriques relatives à ladite personne (78).

9. Procédé selon la revendication 8, dans lequel le calcul de la clé est effectué à partir de la forme générale des empreintes de certains doigts au moins de ladite personne.

10. Procédé selon la revendication 8 ou 9, dans lequel le calcul de la clé est effectué à partir d'informations relatives à l'iris de l'oeil de ladite personne.

11. Procédé selon l'une quelconque des revendications 8 à 10, comprenant les étapes suivantes, lorsqu'une concordance a été trouvée à l'étape /b/ :
- obtenir une identité (80) de ladite personne (78) ;
- calculer la clé (81) associée à ladite personne ;
- comparer la clé calculée avec la clé mémorisée dans la base de données des identités (89) en association avec l'identité obtenue pour ladite personne ; et
- mettre en oeuvre sélectivement l'étape /c/ en fonction du résultat de la comparaison entre lesdites clés calculée et mémorisée.

12. Procédé selon l'une quelconque des revendications 5 à 7, dans lequel le calcul de la clé est aléatoire.

13. Procédé selon la revendication 12, dans lequel on mémorise en outre la clé dans la base de données biométriques (97) en association avec les données biométriques relatives à ladite personne (93).

14. Procédé selon la revendication 13, comprenant les étapes suivantes, lorsqu'une concordance a été trouvée à l'étape /b/ :
- obtenir une identité (95) de ladite personne (93) ;
- obtenir la clé mémorisée dans la base de données biométriques (97) en association avec les données biométriques relatives à ladite personne ;
- comparer la clé obtenue avec la clé mémorisée dans la base de données des identités (101) en association avec l'identité obtenue pour ladite personne ; et
- mettre en oeuvre sélectivement l'étape /c/ en fonction du résultat de la comparaison entre lesdites clés.

15. Procédé selon la revendication 1, dans lequel l'étape /e/ comprend une comparaison entre des données biométriques (32, 40, 60, 70) relatives à ladite personne et les données biométriques à partir desquelles le moyen d'identification associé à ladite personne a été généré.

16. Procédé selon la revendication 1, dans lequel lorsqu'une concordance a été trouvée à l'étape /b/, on ajoute à une première liste des identifiants des moyens d'identification révoqués (55, 91), l'identifiant unique du moyen d'identification associé à ladite personne (47, 78) qui était mémorisé dans la base de données biométriques (51, 83) en association avec les données biométriques relatives à ladite personne (47, 78) et, dans lequel l'étape /f/ est mise en oeuvre sélectivement selon que l'identifiant du moyen d'identification (61, 71) avec lequel ladite personne (59, 69) s'identifie est ou non mémorisé dans une seconde liste des identifiants des moyens d'identification révoqués (64, 74).

17. Procédé selon la revendication 16, dans lequel les phases de génération d'un moyen unique d'identification associé à ladite personne et de délivrance d'au moins un droit à ladite personne sont mises en oeuvre par une première et une seconde entités respectivement, et dans lequel la première liste des identifiants des moyens d'identification révoqués (55, 91) est stockée sur une base de données des identifiants des moyens d'identification révoqués consultable par la seconde entité, la seconde liste des identifiants des moyens d'identification révoqués (64, 74) étant alors identique à la première liste des identifiants des moyens d'identification révoqués (55, 91).

18. Procédé selon la revendication 16, dans lequel les phases de génération d'un moyen unique d'identification associé à ladite personne et de délivrance d'au moins un droit à ladite personne sont mises en oeuvre par une première et une seconde entités respectivement, et dans lequel les identifiants ajoutés à la première liste des identifiants des moyens d'identification révoqués (55, 91) sont transmis de la première entité vers la seconde entité pour mettre à jour la seconde liste des identifiants des moyens d'identification révoqués (64, 74).

19. Procédé selon la revendication 18, dans lequel la transmission des identifiants de la première entité vers la seconde entité est effectuée selon l'un au moins des mécanismes suivants : par transfert périodique desdits identifiants ajoutés à la première liste des identifiants des moyens d'identification révoqués (55, 91) depuis le dernier transfert, ou par transfert périodique de l'ensemble des identifiants mémorisés dans la première liste des identifiants des moyens d'identification révoqués, ou par transfert instantané de chaque identifiant lors de son ajout à la première liste des identifiants des moyens d'identification révoqués.

20. Système (104) comprenant des moyens pour mettre en oeuvre le procédé selon l'une quelconque des revendications précédentes.

21. Système (104) selon la revendication 20, comprenant une première entité (105) agencée pour mettre en oeuvre la première phase de génération d'un moyen unique d'identification (29, 56, 84, 98, 103) associé à au moins une personne (22, 47, 78, 93), et une seconde entité (106) agencée pour mettre en oeuvre la seconde phase de délivrance d'au moins un droit à au moins une personne (31, 39, 59, 69).

## Patentansprüche

1. Verfahren zur Identifizierungsprüfung von Personen zur Einräumung von Rechten, umfassend eine Phase der Erzeugung eines einzigen Identifizierungsmittels (29, 56, 84, 98, 103, 111), das mindestens einer Person (22, 47, 78, 93, 107, 113) zugeordnet ist, umfassend die folgenden Schritte:
/a/ Erfassung von biometrischen Daten (23, 48, 79, 94, 108) in Zusammenhang mit der Person;
/b/ Suche nach einer Übereinstimmung zwischen den biometrischen Daten in Zusammenhang mit der Person und vorher in einer biometrischen Datenbasis (26, 51, 83, 97, 110) gespeicherten biometrischen Daten, wobei sich die vorher gespeicherten biometrischen Daten auf Personen beziehen, für die Identifizierungsmittel vorher erzeugt wurden, ohne aber Identitäten von Personen in Verbindung mit den gespeicherten biometrischen Daten zu enthalten; und
wenn keine Übereinstimmung gefunden wurde:
/c/ Erzeugung eines Identifizierungsmittels (29, 56, 84, 98, 103, 111), das der Person zugeordnet ist, auf Basis der biometrischen Daten in Zusammenhang mit der Person und mindestens einer Identität (24, 49, 80, 95, 117) der Person,
/d/ Hinzufügung der biometrischen Daten in Zusammenhang mit der Person in Verbindung mit einem einzigen Identifikator des Identifizierungsmittels (56, 84), das der Person (47, 78) zugeordnet ist, in der biometrischen Datenbasis,
wobei das Verfahren ferner eine zweite Phase der Einräumung von mindestens einem Recht für die Person (31, 39, 59, 69) umfasst, bei der:
/e/ sich die Person mit Hilfe des Identifizierungsmittels (33, 41, 61, 71), das ihr vorher zugeordnet wurde, identifiziert; und
/f/ das Recht der Person eingeräumt wird, wenn das Recht der Person nicht bereits eine Anzahl von Malen gleich einer vorbestimmten Anzahl eingeräumt wurde, wobei in einer Datenbasis von Rechten (45, 67, 76) bereits an Personen eingeräumte Rechte auf Basis des einzigen Identifikators des Identifizierungsmittels nachgeschlagen werden, wobei dieser Identifikator in das der Person zugeordnete Identifizierungsmittel integriert ist.

2. Verfahren nach einem der vorhergehenden Ansprüche, ferner umfassend einen Schritt der Überprüfung (27, 52, 87, 100, 118) der Identität der Person (22, 47, 78, 93, 113).

3. Verfahren nach Anspruch 2, bei dem die Überprüfung der Identität für eine Person, für die eine Übereinstimmung in Schritt /b/ gefunden wurde, verstärkt wird.

4. Verfahren nach einem der vorhergehenden Ansprüche, bei dem die Erzeugung eines Identifizierungsmittels, das der Person (107) zugeordnet ist, in Schritt /c/ zuerst auf Basis der biometrischen Daten (108) in Zusammenhang mit der Person, dann durch die Hinzufügung mindestens einer Identität (117) der Person erfolgt.

5. Verfahren nach einem der vorhergehenden Ansprüche, bei dem die Phase der Erzeugung eines einzigen Identifizierungsmittels (84, 98, 103), das der Person (78, 93) zugeordnet ist, ferner die folgenden Schritte umfasst:
- Berechnung eines Schlüssels, der der Person zugeordnet ist, wobei der Schlüssel eine deutlich geringere Anzahl von Werten als die Anzahl von Personen, die die Erzeugung eines einzigen Identifizierungsmittels anfordern können, annehmen kann und hoch genug ist, dass zwei beliebigen Personen unterschiedliche Schlüssel mit einem vorbestimmten Wahrscheinlichkeitsniveau zugeordnet werden; und
- Speichern des Schlüssels in einer Datenbasis der Identitäten (89, 101) in Verbindung mit einer Identität der Person.

6. Verfahren nach Anspruch 5, bei dem die Anzahl von Werten des Schlüssels derart gewählt ist, dass die notwendige Rechenleistung, um alle Kombinationen bis ins Letzte zu berechnen, berücksichtigt wird.

7. Verfahren nach Anspruch 5 oder 6, bei dem die Anzahl von Werten des Schlüssels im Wesentlichen zwischen einigen Dutzend und einigen Hundert beträgt, wenn die Anzahl von Personen, die die Erzeugung eines einzigen Identifizierungsmittels anfordern können, einige Millionen oder Dutzend Millionen beträgt.

8. Verfahren nach einem der Ansprüche 5 bis 7, bei dem die Berechnung des Schlüssels auf Basis von biometrischen Daten in Zusammenhang mit der Person (78) erfolgt.

9. Verfahren nach Anspruch 8, bei dem die Berechnung des Schlüssels auf Basis der allgemeinen Form der Abdrücke von mindestens gewissen Fingern der Person erfolgt.

10. Verfahren nach Anspruch 8 oder 9, bei dem die Berechnung des Schlüssels auf Basis von Informationen in Zusammenhang mit der Iris des Auges der Person erfolgt.

11. Verfahren nach einem der Ansprüche 8 bis 10, umfassend die folgenden Schritte, wenn eine Übereinstimmung in Schritt /b/ gefunden wurde:
- Erhalt einer Identität (80) der Person (78);
- Berechnung des Schlüssels (81), der der Person zugeordnet ist;
- Vergleich des berechneten Schlüssels mit dem in der Datenbasis der Identitäten (89) gespeicherten Schlüssel in Verbindung mit der für die Person erhaltenen Identität; und
- selektiver Einsatz des Schrittes /c/ in Abhängigkeit vom Ergebnis des Vergleichs zwischen den berechneten und gespeicherten Schlüsseln.

12. Verfahren nach einem der Ansprüche 5 bis 7, bei dem die Berechnung des Schlüssels zufällig ist.

13. Verfahren nach Anspruch 12, bei dem ferner der Schlüssel in der biometrischen Datenbasis (97) in Verbindung mit den biometrischen Daten in Zusammenhang mit der Person (93) gespeichert wird.

14. Verfahren nach Anspruch 13, umfassend die folgenden Schritte, wenn eine Übereinstimmung in Schritt /b/ gefunden wurde:
- Erhalt einer Identität (95) der Person (93);
- Erhalt des in der biometrischen Datenbasis (97) gespeicherten Schlüssels in Verbindung mit den biometrischen Daten in Zusammenhang mit der Person;
- Vergleich des erhaltenen Schlüssels mit dem in der Datenbasis der Identitäten (101) gespeicherten Schlüssel in Verbindung mit der erhaltenen Identität für die Person; und
- selektiver Einsatz des Schrittes /c/ in Abhängigkeit vom Ergebnis des Vergleichs zwischen den Schlüsseln.

15. Verfahren nach Anspruch 1, bei dem der Schritt /e/ einen Vergleich zwischen biometrischen Daten (32, 40, 60, 70) in Zusammenhang mit der Person und den biometrischen Daten, auf deren Basis das der Person zugeordnete Identifizierungsmittel erzeugt wurde, umfasst.

16. Verfahren nach Anspruch 1, bei dem, wenn eine Übereinstimmung in Schritt /b/ gefunden wurde, zu einer ersten Liste der Identifikatoren der angeforderten Identifizierungsmittel (55, 91) der einzige Identifikator des der Person (47, 78) zugeordneten Identifizierungsmittels, der in der biometrischen Datenbasis (51, 83) in Verbindung mit den biometrischen Daten in Zusammenhang mit der Person (47, 78) gespeichert wurde, hinzugefügt wird, und bei dem der Schritt /f/ selektiv eingesetzt wird, je nachdem, ob der Identifikator des Identifizierungsmittels (61, 71), mit dem sich die Person (59, 69) identifiziert, in einer zweiten Liste der Identifikatoren der angeforderten Identifizierungsmittel (64, 74) gespeichert ist oder nicht.

17. Verfahren nach Anspruch 16, bei dem die Phasen der Erzeugung eines einzigen Identifizierungsmittels, das der Person zugeordnet ist, und der Einräumung mindestens eines Rechtes für die Person von einer ersten bzw. einer zweiten Einheit eingesetzt werden, und bei dem die erste Liste der Identifikatoren der angeforderten Identifizierungsmittel (55, 91) in einer Datenbasis der Identifikatoren der angeforderten Identifizierungsmittel gespeichert ist, die von der zweiten Einheit eingesehen werden kann, wobei die zweite Liste der Identifikatoren der angeforderten Identifizierungsmittel (64, 74) nun mit der ersten Liste der Identifikatoren der angeforderten Identifizierungsmittel (55, 91) identisch ist.

18. Verfahren nach Anspruch 16, bei dem die Phasen der Erzeugung eines einzigen Identifizierungsmittels, das der Person zugeordnet ist, und der Einräumung mindestens eines Rechtes für die Person von einer ersten bzw. einer zweiten Einheit eingesetzt werden, und bei dem die zu der ersten Liste der Identifikatoren der angeforderten Identifizierungsmittel (55, 91) hinzugefügten Identifikatoren von der ersten Einheit zur zweiten Einheit übertragen werden, um die zweite Liste der Identifikatoren der angeforderten Identifizierungsmittel (64, 74) zu aktualisieren.

19. Verfahren nach Anspruch 18, bei dem die Übertragung der Identifikatoren von der ersten Einheit zur zweiten Einheit nach mindestens einem der folgenden Mechanismen erfolgt: durch periodische Übertragung der zu der ersten Liste der Identifikatoren der angeforderten Identifizierungsmittel (55, 91) seit der letzten Übertragung hinzugefügten Identifikatoren, oder durch periodische Übertragung der Gesamtheit der in der ersten Liste der Identifikatoren der angeforderten Identifizierungsmittel gespeicherten Identifikatoren, oder durch momentane Übertragung jedes Identifikators bei seiner Hinzufügung zu der ersten Liste der Identifikatoren der angeforderten Identifizierungsmittel.

20. System (104), umfassend Mittel, um das Verfahren nach einem der vorhergehenden Ansprüche einzusetzen.

21. System (104) nach Anspruch 20, umfassend eine erste Einheit (105), die dazu vorgesehen ist, die erste Phase der Erzeugung eines einzigen Identifizierungsmittels (29, 56, 84, 98, 103), das mindestens einer Person (22, 47, 78, 93) zugeordnet ist, einzusetzen, und eine zweite Einheit (106), die dazu vorgesehen ist, die zweite Phase der Einräumung mindestens eines Rechtes für mindestens eine Person (31, 39, 59, 69) einzusetzen.

## Claims

1. Method of identification control of persons for granting entitlement, comprising a phase of generating a unique means of identification (29, 56, 84, 98, 103, 111) associated with at least one person (22, 47, 78, 93, 107, 113) comprising the following steps:
/a/ detecting biometric data (23, 48, 79, 94, 108) relating to said person;
/b/ searching for a match between the biometric data relating to said person and biometric data previously stored in a biometric database (26, 51, 83, 97, 110), said previously stored biometric data relating to persons for which means of identification have been previously generated, without containing identities of persons in association with the biometric data stored,; and, when no match has been found:
/c/ generating a means of identification (29, 56, 84, 98, 103, 111) associated with said person from biometric data relating to said person and at least one identity (24, 49, 80, 95, 117) of said person;
/d/ adding the biometric data relating to said person in association with a unique identifier of said means of identification (56, 84) associated with said person, to the biometric database ; the method furthermore comprising a second phase of granting at least one entitlement to said person (31, 39, 59, 69), in which:
/e/ said person identifies themselves with the aid of the means of identification (33, 41, 61, 71) which has been previously associated therewith; and
/f/ said entitlement is granted to said person when said entitlement has not already been granted to said person a number of times equal to a predetermined number, by consulting, in a database of entitlements (45, 67, 76), of the entitlements already granted to persons, on the basis of the unique identifier of the means of identification this identifier being incorporated into said means of identification associated with said person.

2. The method as claimed in claim 1, furthermore comprising a step of verification (27, 52, 57, 100, 118) of the identity of said person (22, 47, 78, 93, 113).

3. The method as claimed in claim 2, in which the verification of the identity is reinforced for a person for which a match has been found in step /b/.

4. The method as claimed in one of the preceding claims, in which the generation, in step /c/, of a means of identification associated with said person (107) is performed firstly from biometric data (108) relating to said person, then supplemented with the addition of at least one identity (117) of said person.

5. The method as claimed in one of the preceding claims, in which the phase of generating a unique means of identification (84, 98, 103) associated with said person (78, 93) furthermore comprises the following steps: calculating a key associated with said person, the key being able to take a much smaller number of values than the number of persons apt to require the generation of a unique means of identification, and high enough for any two persons to be associated with different keys, with a predetermined level of probability; and storing said key in a database of the identities (89, 101) in association with an identity of said person.

6. The method as claimed in claim 5, in which the number of values of the key is chosen in such a way as to take account of the calculational power necessary to calculate all the combinations by brute force.

7. The method as claimed in claim 5 or 6, in which the number of values of the key lies substantially between a few tens and a few hundreds when the number of persons apt to require the generation of a unique means of identification is a few million or tens of millions.

8. The method as claimed in one of claim5 to 7, in which the calculation of the key is performed from biometric data relating to said person.

9. The method as claimed in claim 8, in which the calculation of the key is performed from the general form of the prints of certain fingers at least of said person.

10. The method as claimed in claim 8 or 9, in which the calculation of the key is performed from information relating to the iris of the eye of said person.

11. The method as claimed in anyone of claims 8 to 10, comprising the following steps, when a match has been found in step /b/:
- obtaining an identity (80) of said person (78);
- calculating the key (81) associated with said person;
- comparing the calculated key with the key stored in the database of identities (89) in association with the identity obtained for said person; and
- selectively implementing step /c/ as a function of the result of the comparison between said calculated and stored keys.

12. The method as claimed in anyone of claims 5 to 7, in which the calculation of the key is random.

13. The method as claimed in claim 12, in which moreover the key is stored in the biometric database (97) in association with the biometric data relating to said person (93).

14. The method as claimed in claim 13, comprising the following steps, when a match has been found in step /b/:
- obtaining an identity (95) of said person (93);
- obtaining the key stored in the biometric database (97) in association with the biometric data relating to said person;
- comparing the key obtained with the key stored in the database of identifies (101) in association with the identity obtained for said person; and
- selectively implementing step /c/ as a function of the result of the comparison between said keys.

15. The method as claimed in claim 1, in which step /e/ comprises a comparison between biometric data (32, 40, 60, 70) relating to said person and the biometric data from which the means of identification associated with said person has been generated.

16. The method as claimed in claim 1, in which when a match has been found in step /b/, the unique identifier of the means of identification associated with said person which was stored in the biometric database in association with the biometric data relating to said person is added to a first list of the identifiers of the revoked means of identification (55, 91), and, in which step /f/ is selectively implemented depending on whether the identifier of the means of identification (61, 71) with which said person (59, 69) is identified is or is not stored in a second list of the identifiers of the revoked means of identification (64, 74).

17. The method as claimed in claim 16, in which the phases of generating a unique means of identification associated with said per son and of granting at least one entitlement to said person are implemented by a first and a second entity respectively, and in which the first list of the identifiers of the revoked means of identification (55, 91) is stored on a database of the identifiers of the revoked means of identification that can be consulted by the second entity, the second list of the identifiers of the revoked means of identification (64, 74) then being identical to the first list of the identifiers of the revoked means of identification (55, 91).

18. The method as claimed in claim 16, in which the phases of generating a unique means of identification associated with said person and of granting at least one entitlement to said person are implemented by a first and a second entity respectively, and in which the identifiers added to the first list of the identifiers of the revoked means of identification (55, 91) are transmitted from the first entity to the second entity to update the second list of the identifiers of the revoked means of identification (55, 91).

19. The method as claimed in claim 18, in which the transmission of the identifiers from the first entity to the second entity is performed according to at least one of the following mechanisms: by periodic transfer of said identifiers added to the first list of the identifiers of the revoked means of identification (55, 91) since the last transfer, or by periodic transfer of the whole set of identifiers stored in the first list of the identifiers of the revoked means of identification, or by instantaneous transfer of each identifier upon its addition to the first list of the identifiers of the revoked means of identification.

20. System (104) comprising means for implementing the method according to one of the preceding claims.

21. System (104) according to claim 20, comprising a first entity (105) configured for implementing the first phase of generating a unique means of identification (29, 56, 84, 98, 103) associated with at least one person (22, 47, 78, 93), and a second entity (106) configured for implementing the second phase of granting at least one entitlement to at least one person (31, 39, 59, 69).
